# EUROPEAN PATENT APPLICATION

(11) **EP 4 678 453 A1**
(43) Date of publication of application: **14.01.2026**
(21) Application number: 24187177.1
(22) Date of filing: 08.07.2024
(51) Int. Cl.: B60L 1/02, B60K 11/02, B60L 58/27, H01M 10/625, B60L 53/67, B60L 53/68

(54) **APPROACHES FOR ENERGY EXCHANGE**

(71) Applicant: Volvo Construction Equipment AB, 631 85 Eskilstuna (SE)
(72) Inventor: EKMAN, Gordon, 342 63 MOHEDA (SE); ÖRKENRUD, Kim, 352 64 VÄXJÖ (SE); KVIST, Roland, 360 42 BRAÅS (SE)
(74) Representative: Ström & Gulliksson AB

(57) **Abstract**

An arrangement for a vehicle is disclosed, comprising an energy exchange device configured to form a temperature exchange connection between the vehicle and a piece of equipment which is external to the vehicle, and to cause temperature increase of a battery system of the piece of equipment by transferring heat from the vehicle to the piece of equipment via the temperature exchange connection.

A computer system is disclosed, implementing a remote vehicle selection function. The computer system comprises processing circuitry configured to select a vehicle from a plurality of available vehicles (each comprising an arrangement as disclosed), and transmit a control signal to the selected vehicle to trigger formation of the temperature exchange connection, and/or transfer of heat from the selected vehicle to the piece of equipment via the temperature exchange connection.

Corresponding vehicle, method, computer program product, and computer-readable storage medium are also disclosed.

## Description

### TECHNICAL FIELD

The disclosure relates generally to energy management for vehicles. In particular aspects, the disclosure relates to energy exchange between a vehicle and a piece of equipment which is external to the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle. More generally, the disclosure can be applied to any vehicle and any piece of equipment, as suitable.

In a particular example, the vehicle is a dump truck and the piece of equipment is an excavator. General examples of vehicles include - but are not limited to - land vehicles (e.g., heavy-duty vehicles), marine vehicles (e.g., boats), aerial/space vehicles (e.g., drones), etc. General examples of pieces of equipment include - but are not limited to - land vehicles (e.g., heavy-duty vehicles), marine vehicles (e.g., boats), aerial/space vehicles (e.g., drones), construction equipments (e.g., excavators), mobile industrial appliances (e.g., robots), etc.

### BACKGROUND

It is cumbersome in cold environments to charge the battery system of battery powered equipment. Examples of cold environments include outdoor environments in cold climates, space environments, refrigerated indoor environments, etc. At low temperatures, charging may entail severe damage to the battery system and/or it may not be possible to perform charging at all.

To avoid these predicaments, battery powered equipment can be stored in a reasonably warm environment when it is not in use. Examples of reasonably warm environments include heated indoor environments, etc. However, this approach may not always be practically feasible. For example, when the battery powered equipment is relatively large, it may be very costly to provide a warm storing space for it. Alternatively or additionally, when the battery powered equipment is mobile and operates over a relatively large area, it may be very energy consuming to have it returned to a warm storing space whenever it is not in use. Yet alternatively or additionally, when the battery powered equipment is stationary, it may be impossible to have it in a warm storing space whenever it is not in use.

Alternatively or additionally, the battery powered equipment may be provided with a heating system, which can be connected to a power grid and used to warm up the battery system before charging. However, this approach may not always be practically feasible either. For example, when the battery powered equipment is mobile and operates over a relatively large area, it may be very energy consuming to have it returned to a location with power grid service whenever it is not in use. Alternatively or additionally, when the battery powered equipment is stationary, it may be impossible to have it returned to a location with power grid service whenever it is not in use.

If it is at all possible to charge the battery system of battery powered equipment in a cold environment, the charging typically needs to be performed very cautiously until the temperature of the battery system has increased (either due to excess heat from the charging operation itself, or by running a heating system when the charge is high enough to power it). This entails a cumbersome delay before the battery powered equipment can be put to use.

It should be noted that similar problems as those described herein can arise for any battery powered equipment in any cold environment.

In an example of the above problems, the battery powered equipment is an excavator of an extensive construction site with no heated indoor storing available nearby. Thus, the excavator is left outside over nights, weekends, and holidays, and it is not possible to store all battery powered equipments of the construction site close to a power grid service location. In such situations, it may take a lot of time until the excavator is re-charged and ready to be operated when the weather conditions are cold, if it is at all possible to re-charge it until the weather conditions are warmer.

Thus, there is a need for approaches for charging of battery powered equipment in cold environments.

### SUMMARY

According to a first aspect of the disclosure, an arrangement for a vehicle is disclosed. The arrangement comprises an energy exchange device configured to form a temperature exchange connection between the vehicle and a piece of equipment which is external to the vehicle. The energy exchange device is also configured to cause temperature increase of a battery system of the piece of equipment by transferring heat from the vehicle to the piece of equipment via the temperature exchange connection. The first aspect of the disclosure may seek to enable or facilitate charging of battery powered equipment in cold environments. A technical benefit may include that relocation of the piece of equipment is reduced. A technical benefit may include that a time until the piece of equipment is operable is reduced.

Optionally in some examples, including in at least one preferred example, the temperature exchange connection may be between the piece of equipment and a coolant system of the vehicle. A technical benefit may include that excess heat from the vehicle is used for warming up the battery system of the piece of equipment, which is energy efficient.

Optionally in some examples, including in at least one preferred example, the temperature exchange connection may be between the piece of equipment and a heat harvesting device mounted on an exhaust system of the vehicle. A technical benefit may include that excess heat from the vehicle is used for warming up the battery system of the piece of equipment, which is energy efficient.

Optionally in some examples, including in at least one preferred example, the energy exchange device may be a primary energy exchange device, and the arrangement may further comprise a secondary energy exchange device configured to form an electric energy exchange connection between the vehicle and the piece of equipment, and cause temperature increase of the battery system of the piece of equipment by transferring electric energy from the vehicle to the piece of equipment. A technical benefit may include that a redundancy approach for heating is provided in case the primary energy exchange device is temporarily not operable. A technical benefit may include that a time until the piece of equipment is operable is further reduced when the primary and secondary energy exchange devices are used simultaneously.

Optionally in some examples, including in at least one preferred example, the arrangement may further comprise a controller configured to selectively enable transfer via the energy exchange device. A technical benefit may include that initiation of the heat transfer is performed in a controlled manner.

Optionally in some examples, including in at least one preferred example, the controller may be configured to enable transfer via the energy exchange device responsive to an enabling input at a user interface. A technical benefit may include that initiation of the heat transfer is under control of an operator of the vehicle (e.g., a driver).

Optionally in some examples, including in at least one preferred example, the controller may be configured to enable transfer via the energy exchange device automatically responsive to the exchange connection between the vehicle and the piece of equipment being formed. A technical benefit may include that initiation of the heat transfer is automated.

Optionally in some examples, including in at least one preferred example, the controller may be configured to enable transfer via the energy exchange device responsive to receipt of a control signal from a remote vehicle selection function. A technical benefit may include that initiation of the heat transfer is under control of a centralized function which configured to select among a plurality of vehicles. This provides opportunities for optimization of use of the plurality of vehicles, and/or opportunities for optimization of the heating of the battery system of the piece of equipment.

According to a second aspect of the disclosure, a vehicle is provided comprising the arrangement according to the first aspect. The second aspect of the disclosure may seek to provide a vehicle suitable for enabling or facilitating charging of battery powered equipment in cold environments. A technical benefit may include that relocation of the piece of equipment is reduced. A technical benefit may include that a time until the piece of equipment is operable is reduced.

Optionally in some examples, including in at least one preferred example, the vehicle may further comprise one or more electric motor(s) driven by a power unit, wherein each electric motor is configured to provide torque to one or more wheel(s) of the vehicle. Then, the energy exchange device may be configured to transfer heat generated by operation of the power unit to the piece of equipment via the temperature exchange connection. A technical benefit may include that excess heat from the power unit is used for warming up the battery system of the piece of equipment, which is energy efficient.

According to a third aspect of the disclosure, a computer system is provided, which implements a remote vehicle selection function to cause temperature increase of a battery system of a piece of equipment. The computer system comprises processing circuitry configured to select a vehicle from a plurality of available vehicles, wherein each vehicle comprises the arrangement according to the first aspect. The processing circuitry is also configured to transmit a control signal to the selected vehicle to trigger formation of the temperature exchange connection between the selected vehicle and the piece of equipment and/or transfer of heat from the selected vehicle to the piece of equipment via the temperature exchange connection. The third aspect of the disclosure may seek to enable or facilitate charging of battery powered equipment in cold environments. A technical benefit may include that relocation of the piece of equipment is reduced. A technical benefit may include that a time until the piece of equipment is operable is reduced. A technical benefit may include opportunities for optimization of the use of the plurality of vehicles, and/or opportunities for optimization of the heating of the battery system of the piece of equipment.

Optionally in some examples, including in at least one preferred example, the processing circuitry may be further configured to receive respective information pertaining to each of the plurality of vehicles and the selection may be based on the received information. The information may comprise one or more of: a location of the vehicle, a type of power unit of the vehicle, a battery charge of the vehicle, an activity level of a fuel cell arrangement of the vehicle, and an activity level of an internal combustion engine of the vehicle. A technical benefit may include that a time until the piece of equipment is operable is reduced. A technical benefit may include opportunities for optimization of the use of the plurality of vehicles, and/or opportunities for optimization of the heating of the battery system of the piece of equipment.

According to a fourth aspect of the disclosure, a computer-implemented method is provided, which implements a remote vehicle selection function for causing temperature increase of a battery system of a piece of equipment. The method comprises selecting (by processing circuitry of a computer system) a vehicle from a plurality of available vehicles according to the second aspect, and transmitting (by the processing circuitry) a control signal to the selected vehicle. The control signal is for triggering formation of the temperature exchange connection between the selected vehicle and the piece of equipment, and/or transfer of heat from the selected vehicle to the piece of equipment via the temperature exchange connection. The fourth aspect of the disclosure may seek to enable or facilitate charging of battery powered equipment in cold environments. A technical benefit may include that relocation of the piece of equipment is reduced. A technical benefit may include that a time until the piece of equipment is operable is reduced. A technical benefit may include opportunities for optimization of the use of the plurality of vehicles, and/or opportunities for optimization of the heating of the battery system of the piece of equipment.

According to a fifth aspect of the disclosure, a computer program product is provided, which comprises program code for performing, when executed by the processing circuitry, the method of the fourth aspect.

According to a sixth aspect of the disclosure, a non-transitory computer-readable storage medium is provided, which comprises instructions, which when executed by the processing circuitry, cause the processing circuitry to perform the method of the fourth aspect

The fifth and/or sixth aspect of the disclosure may seek to convey program code for enabling or facilitating charging of battery powered equipment in cold environments. A technical benefit may include that new central control functions for vehicles and/or legacy central control functions for vehicles may be conveniently configured, by software installation/update, to select a vehicle from a plurality of available vehicles, and transmit a control signal to the selected vehicle, wherein the control signal is configured to trigger formation of a temperature exchange connection between the selected vehicle and a piece of equipment, and/or transfer of heat from the selected vehicle to the piece of equipment via the temperature exchange connection.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating an energy exchange connection according to some examples, between a vehicle and a piece of equipment.
**FIG. 2** is a schematic drawing illustrating a vehicle according to some examples.
**FIG. 3** is a schematic drawing illustrating a vehicle sub-system according to some examples.
**FIG. 4** is a schematic block diagram illustrating an arrangement comprising an energy exchange device according to some examples.
**FIG. 5** is a schematic drawing illustrating a vehicle fleet and a computer system implementing a remote vehicle selection function according to some examples.
**FIG. 6** is a flowchart illustrating a method according to some examples.
**FIG. 7** is a schematic diagram illustrating a computer system for implementing examples disclosed herein according to some examples.
**FIG. 8** is a schematic drawing illustrating a computer program product in the form of a non-transitory computer-readable storage medium according to some examples.
**FIG. 9** is a schematic block diagram of a control unit according to some examples.

### DETAILED DESCRIPTION

The detailed description set forth below provides information and examples of the disclosed technology with sufficient detail to enable those skilled in the art to practice the disclosure.

Approaches as suggested herein aim to address the problem that it may be cumbersome in cold environments to charge the battery system of battery powered equipment. Thus, approaches as suggested herein may seek to enable or facilitate charging of battery powered equipment in cold environments.

According to some examples, the need to relocate the piece of equipment to enable charging may be reduced. For example, the piece of equipment may not need to be stored in a reasonably warm environment when not in use. Alternatively or additionally, the piece of equipment may not need to be in vicinity of a location with power grid service for running a heating system to warm up the battery system before charging.

According to some examples, the time may be reduced until a piece of equipment in need of charging is operable. For example, charging of the piece of equipment may not need to be performed very cautiously in an initial stage.

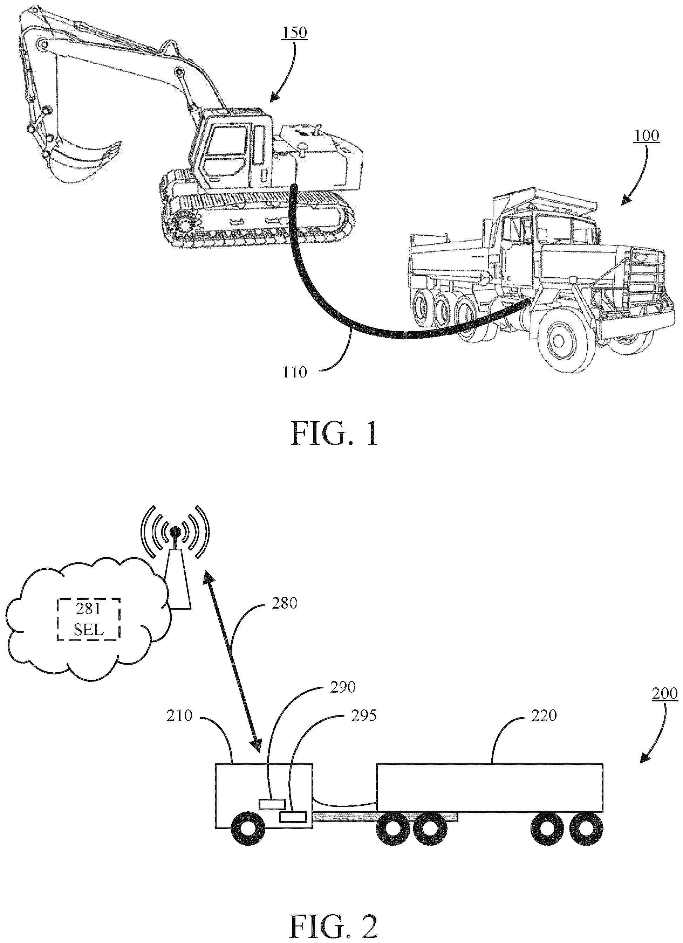

**FIG. 1** schematically illustrates an energy exchange connection **110** between a vehicle **100** and a piece of equipment **150.** In this example, the piece of equipment **150** is an excavator and the vehicle **100** is a dump truck.

The energy exchange connection **110** comprises at least a temperature exchange connection configured to transfer heat from the vehicle **100** to the piece of equipment **150.** For example, the temperature exchange connection may comprise a heat exchanger, or any other apparatus for transfer of heat.

The energy exchange connection **110** is formed by use of an energy exchange device comprised in the vehicle **100.** Additionally, forming of the energy exchange connection **110** may also comprise use (e.g., in a plug-socket manner) of an energy exchange device comprised in the piece of equipment **150** and/or an energy exchange device which is separate from the vehicle 100 and from the piece of equipment **150.**

The energy exchange device comprised in the vehicle **100** is configured to cause temperature increase of a battery system of the piece of equipment **150** by transferring heat from the vehicle **100** to the piece of equipment **150** via the temperature exchange connection comprised in the energy exchange connection **110.** For example, the energy exchange device comprised in the vehicle **100** may be configured to form a thermal connection between a coolant system of the vehicle **100** (e.g., using a heat harvesting device mounted on - or comprised in - the coolant system of the vehicle **100**) and a heating system of the battery system of the piece of equipment **150** (typically without mixing of cooling/heating fluids between the vehicle **100** and the piece of equipment **150**). Alternatively or additionally, the energy exchange device comprised in the vehicle **100** may be configured to form a thermal connection between a heat harvesting device of the vehicle **100** (e.g., mounted on an exhaust system of the vehicle **100**) and a heating system of the battery system of the piece of equipment **150.**

In some examples, the energy exchange connection **110** may also comprise an electric energy exchange connection configured to transfer electric energy (e.g., using current and/or voltage transfer) from the vehicle **100** to the piece of equipment **150.** For example, the electric energy exchange connection may comprise an electric cable, or any other apparatus for transfer of electric energy (e.g., using transfer of electric energy by induction).

When an electric energy exchange connection is comprised in the energy exchange connection **110,** the energy exchange device comprised in the vehicle **100** may be additionally configured to cause temperature increase of the battery system of the piece of equipment **150** by transferring electric energy from the vehicle **100** to the piece of equipment **150** via the electric energy exchange connection. For example, the energy exchange device comprised in the vehicle **100** may be configured to form an electric connection between an electric energy source of the vehicle **100** and an electric heating system of the battery system of the piece of equipment **150.**

**FIG. 2** schematically illustrates an example vehicle **200** (compare with the vehicle **100** of **FIG. 1**) for cargo transport where the techniques disclosed herein can be advantageously applied. The vehicle **200** comprises a truck/tractor/towing unit **210** configured to tow one or more trailer unit(s) **220** in a known manner. The tractor unit **210** and/or the trailer unit(s) **220** may comprise a vehicle control unit (VCU) **290** configured to perform various vehicle control functions, such as vehicle motion management (VMM), power/energy management, etc.

Any of one or more VCU(s) **290** may be configured to perform, or cause performance of, the techniques disclosed herein. To this end, a VCU **290** may be configured to control an energy exchange device **295** of the vehicle **200** to transfer heat from the vehicle **200** to a piece of equipment via a temperature exchange connection, and/or to transfer electric energy from the vehicle **200** to a piece of equipment via an electric energy exchange connection. For example, a VCU **290** may comprise a controller configured to selectively enable and/or selectively disable transfer via the energy exchange device **295** (e.g., responsive to one or more of: formation of the exchange connection, input at a user interface, receipt of a control signal **280** from a remote vehicle selection function **281**). Alternatively or additionally, a VCU **290** may be configured to transmit (or cause transmission of) information **280** pertaining to the vehicle **200** to a computer system implementing a remote vehicle selection function **281** (e.g., information comprising one or more of: a location of the vehicle, a type of power unit of the vehicle, a battery charge of the vehicle, an activity level of a fuel cell arrangement of the vehicle, and an activity level of an internal combustion engine of the vehicle).

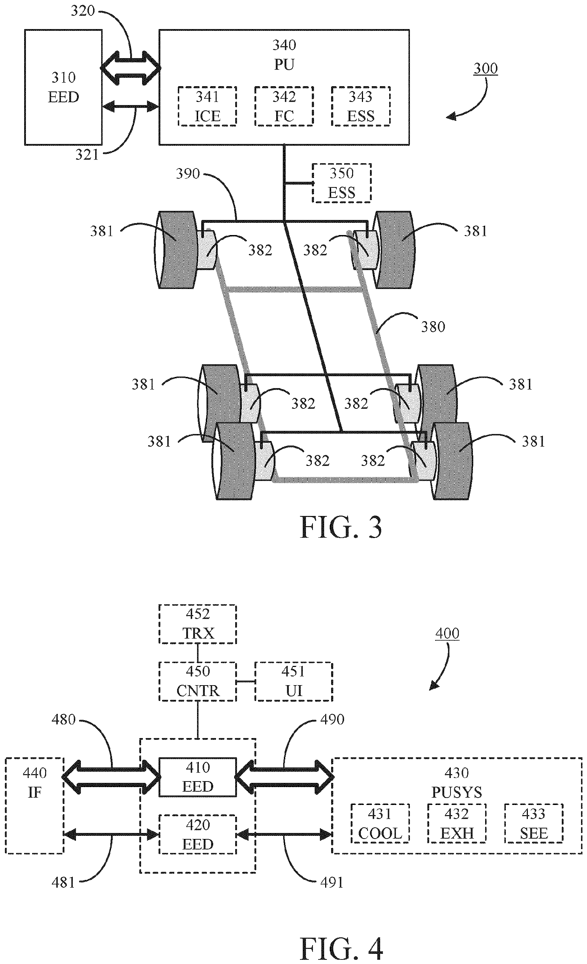

**FIG. 3** schematically illustrates a vehicle sub-system **300** according to some examples. For example, the vehicle sub-system **300** may be comprised in a vehicle (compare with **100** of **FIG. 1** and **200** of **FIG. 2**). The vehicle-subsystem **300** is particularly suitable for a vehicle platform, which is also schematically illustrated in **FIG. 3****.**

According to the vehicle platform, wheels **381** are mounted in relation to a frame structure **380,** and one - or a plurality of - electric motors **382** are provided for driving the wheels **381** (e.g., by providing torque to one or more of the wheel(s)). For example, each electric motor **382** may be mounted in direct association with a respective wheel **381** (e.g., electric motor mounted on the respective wheel), thereby enabling individual wheel drive. However, other mounting approaches for the electric motors are possible (e.g., an electric motor being mounted in association with a corresponding wheel axle and configured to drive the wheels of that axle, an electric motor being mounted to enable it to drive two or more wheels of one side of the vehicle, etc.).

In the context of the vehicle platform, there is provided one or more power unit(s) (PU) **340** configured to drive the electric motor(s) **382.** Various types of power units include (but are not limited to) an internal combustion engine (ICE) **341** configured to drive an electric generator, a fuel cell arrangement (FC) **342,** and an energy storing system (ESS) **343** (e.g., a battery system). A power unit **340** may drive the electric motor(s) **382** by directly supplying electric power/energy to the electric motor(s) and/or by supplying electric power/energy to an energy storing system (e.g., the ESS **343,** or another ESS **350**), which in turn supplies electric power/energy to the electric motor(s).

In some examples, the vehicle platform may provide a power unit interface configured to receive one or more power unit(s) **340, 341, 342, 343,** whereby different types of power units can be utilized for the same vehicle platform. The power unit interface may be configured to receive and hold a single power unit at a time, or two or more power units in parallel.

The vehicle sub-system **300** comprises a transfer network **390** configured to transfer electric energy; to supply the electric motor(s) **382** with electric energy from the power unit(s) **340, 341, 342, 343.**

Generally, the vehicle sub-system **300** is suitable for providing heat and/or electric energy to an energy exchange device (EED) **310** (compare with **295** of **FIG. 2**), to be transferred - via an energy exchange connection - to a piece of equipment which is external to the vehicle comprising the vehicle sub-system **300.** For example, electric energy from the power unit(s) **340, 341, 342, 343** may be provided to the EED **310.** Alternatively or additionally, heat from operation of the FC **341** may be harvested by a cooling system and provided to the EED **310.** Yet alternatively or additionally, heat from operation (e.g., charging) of the ESS **343** may be harvested by a cooling system and provided to the EED **310.** Yet alternatively or additionally, heat from operation of the ICE **341** may be harvested by a cooling system and provided to the EED **310.** Yet alternatively or additionally, heat from the exhaust of the ICE **341** may be harvested from the exhaust system and provided to the EED **310.**

**FIG. 4** schematically illustrates an arrangement **400** for a vehicle according to some examples. For example, the arrangement **400** may be comprised (or comprisable) in a vehicle such as any of the vehicle **100** of **FIG. 1** and the vehicle **200** of **FIG. 2****.**

The arrangement **400** comprises an energy exchange device (EED) **410** (compare with **295** of **FIG. 2** and **310** of **FIG. 3**). The EED **410** is configured to form a temperature exchange connection between the vehicle and a piece of equipment which is external to the vehicle (compare with **110** and **150** of **FIG. 1****),** and to cause temperature increase of a battery system of the piece of equipment by transferring heat from the vehicle to the piece of equipment via the temperature exchange connection. To this end, the EED **410** may comprise a heat exchanger and/or other devices for transfer of heat (or parts thereof; e.g., operable to connect to a corresponding heat exchanger part comprised in the piece of equipment in a plug-socket manner).

In some examples, the EED **410** may be associated with (e.g., comprise or be connected/connectable to) a first temperature transfer device **490** (e.g., a cooling fluid system) configured to harvest heat from one or more devices comprised in the vehicle. Alternatively or additionally, the EED **410** may be associated with (e.g., comprise or be connected/connectable to) a second temperature transfer device **480** (e.g., a cooling fluid system) configured to provide heat to an interface (IF) **440** for transfer to a piece of equipment which is external to the vehicle. The first temperature transfer device **490** and the second temperature transfer device **480** may be the same temperature transfer device, or may be different temperature transfer devices. Thus, the temperature exchange connection between the vehicle and the piece of equipment may comprise the EED **410;** possibly together with one or more of: the IF **440,** the first temperature transfer device **490,** the second temperature transfer device **480,** and corresponding parts comprised in the piece of equipment (and/or in a connection device which is separate from the vehicle and from the piece of equipment).

At the piece of equipment, the temperature exchange connection may be associated with (e.g., comprise or be connected/connectable to) a temperature transfer device (e.g., a heating fluid system) configured to increase the temperature of the battery system of the piece of equipment.

In some examples, the arrangement **400** may further comprise a secondary energy exchange device (EED) **420** (the EED **410** being a primary energy exchange device). The primary and secondary EEDs **410, 420** may be implemented as separate devices or may be comprised in a single device. The secondary EED **420** is configured to form an electric energy exchange connection between the vehicle and a piece of equipment which is external to the vehicle, and to cause temperature increase of the battery system of the piece of equipment by transferring electric energy from the vehicle to the piece of equipment via the electric energy exchange connection. To this end, the secondary EED **420** may comprise one or more electric cables and/or other devices for transfer of electric energy (or parts thereof; e.g., operable to connect to a corresponding part comprised in the piece of equipment in a plug-socket manner).

In some examples, the secondary EED **420** may be associated with (e.g., comprise or be connected/connectable to) a first electric energy transfer device **491** (e.g., an electric cable) configured to harvest electric energy from one or more devices comprised in the vehicle. Alternatively or additionally, the secondary EED **420** may be associated with (e.g., comprise or be connected/connectable to) a second electric energy transfer device **481** (e.g., an electric cable) configured to provide electric energy to an interface (IF) **440** for transfer to the piece of equipment. The first electric energy transfer device **491** and the second electric energy transfer device **481** may be the same electric energy transfer device, or may be different electric energy transfer devices. Thus, the electric energy exchange connection between the vehicle and the piece of equipment may comprise the secondary EED 410; possibly together with one or more of: the IF **440,** the first electric energy transfer device **491,** the second electric energy transfer device **481,** and corresponding parts comprised in the piece of equipment (and/or in a connection device which is separate from the vehicle and from the piece of equipment).

At the piece of equipment, the electric energy exchange connection may be associated with (e.g., comprise or be connected/connectable to) a heating system powered by electric energy and configured to increase the temperature of the battery system of the piece of equipment.

In some examples, the IF **440** is configured to enable both heat and electrical energy transfer from the vehicle to the piece of equipment (e.g., comprising plug or socket parts for heat exchange as well as electric energy exchange). Alternatively or additionally, the heat transfer device(s) **480, 490** may be implemented together with the electric energy transfer device(s) **481, 491** in the form of energy transfer device(s) (e.g., comprising both cooling fluid conduct(s) and electric cable(s)).

Typically, the temperature exchange connection and/or the electric energy exchange connection may be formed by the respective EED **410, 420** between the piece of equipment and a power unit system (PUSYS) **430** of the vehicle. The PUSYS **430** may comprise any one or more suitable power unit (e.g., ICE, FC, ESS, etc.). For example, the PUSYS **430** may comprise one or more power units as described for **340** of **FIG. 3****.**

In some examples, the temperature exchange connection is formed between the piece of equipment and a coolant system (COOL) **431** of the vehicle. For example, the coolant system may be configured to harvest heat from one or more of: a FC during operation, a battery (or other ESS) during charging/operation, an ICE during operation, etc.

In some examples, the temperature exchange connection is formed between the piece of equipment and a heat harvesting device (e.g., a heat exchanger) mounted on an exhaust system (EXH) **432** of the vehicle. For example, the heat harvesting device may be configured to harvest heat from exhaust material produced by an ICE during operation.

In some examples, the electric energy exchange connection is formed between the piece of equipment and a source of electric energy (SEE) **433** of the vehicle. For example, the source of electric energy **433** may comprise one or more of: a FC, a battery (or other ESS), an ICE driving a generator, etc.

The arrangement **400** may be applied to enable or facilitate charging of battery powered equipment in cold environments. Excess heat from the vehicle comprising the arrangement **400** may be used for warming up the battery system of the piece of equipment, which is energy efficient.

For example, by application of the arrangement **400** relocation of the piece of equipment (e.g., to a reasonably warm storing location and/or to a location with power grid service) may be reduced. Alternatively or additionally, a time from need of charging until the piece of equipment is operable may be reduced by application of the arrangement **400.**

When the arrangement **400** comprises a secondary EED **420,** a redundancy approach for heating is provided. For example, the redundancy approach may be applied in case the primary EED **420** is temporarily not operable (e.g., when no heat generating processes are currently in operation in the vehicle). Alternatively or additionally, the redundancy approach may be applied to boost the heating caused by the primary EED **420** (e.g., when the heat generating processes currently in operation in the vehicle entail slower heating than desirable). Thus, a time from need of charging until the piece of equipment is operable may be further reduced when the primary and secondary EEDs **410, 420** are used simultaneously, compared to if only the primary EED **410** was used.

In some examples, the arrangement **400** further comprises a controller (CNTR; e.g., controlling/processing circuitry) **450.** For example, the controller **450** may be implemented by a VCU of the vehicle (compare with **290** of **FIG. 2**). The controller **450** may be configured to selectively enable and/or disable energy transfer via one or more of the energy exchange device(s) **410, 420.**

For example, when the temperature transfer device(s) **480, 490** comprise cooling fluid system(s), the controller **450** may be configured to enable energy transfer by letting heated cooling fluid flow through the temperature transfer device(s) **480, 490** (e.g., by opening vault(s), or similar), and to disable energy transfer by hindering cooling fluid from flowing through the temperature transfer device(s) **480, 490** (e.g., by closing vault(s), or similar). Alternatively or additionally, the controller **450** may be configured to enable energy transfer by letting the electric energy transfer device(s) **480, 490** gain access to a source of electric energy (e.g., by closing a switch, or similar), and to disable energy transfer by hindering the electric energy transfer device(s) **480, 490** from having access to any source of electric energy (e.g., by opening a switch, or similar).

In some examples, the controller **450** may be configured to selectively enable and/or disable energy transfer via one or more of the energy exchange device(s) **410, 420,** responsive to an enabling input at a user interface (UI) **451.** For example, the UI **451** may be comprised in the vehicle (e.g., in association with a position of a driver/operator, or in association with the IF **440**) or may be comprised in a remote device (e.g., a computer, a smartphone, a remote control, or similar) which is operatively connected (or connectable) to the controller **450.** The UI **451** may be implemented in any suitable way (e.g., as a mechanical switch, a virtual switch rendered on a touch screen, etc.).

Alternatively or additionally, the controller **450** may be configured to selectively enable energy transfer via one or more of the energy exchange device(s) **410, 420,** automatically responsive to the exchange connection between the vehicle and the piece of equipment being formed. Thus, the energy transfer may be automatically enabled as soon as the exchange connection is in place. To this end, a suitable detector may be provided (e.g., in the IF **440**) which is configured to detect formation of the exchange connection and provide a detection indication to the controller **450.** For example, the detector may be a sensor configured to detect mechanical connection between the IF **440** and a corresponding interface for a piece of equipment.

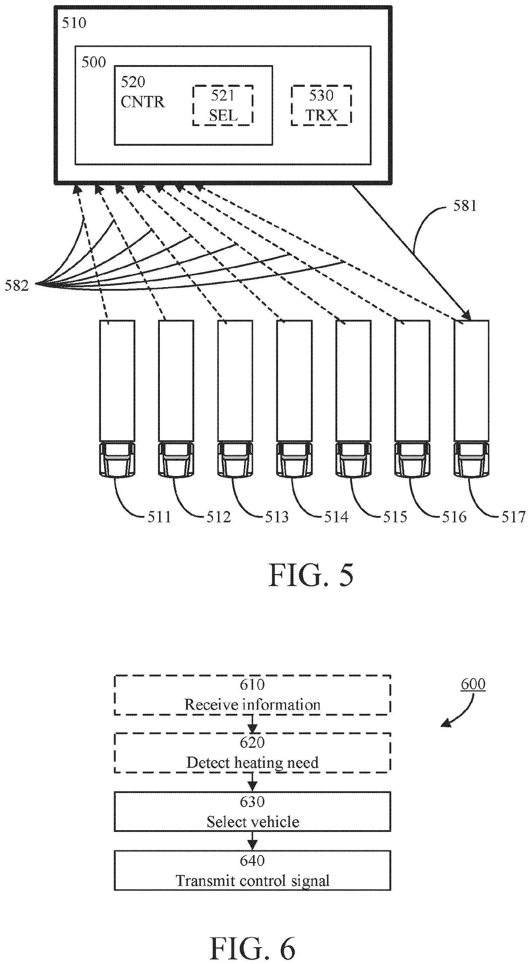

Yet alternatively or additionally, the controller **450** may be configured to selectively enable energy transfer via one or more of the energy exchange device(s) **410, 420,** responsive to receipt of a control signal from a remote vehicle selection function (as will be exemplified in connection with **FIG. 5** and **FIG. 6**). For example, the control signal may be received (e.g., using wireless communication techniques) by a receiver - illustrated here in the form of a transceiver (TRX) **452** - and provided to the controller **450.** In some examples, the selective enablement of energy transfer comprises rendering an indication via a user interface (e.g., the UI **451**) to prompt a driver/operator of the vehicle to bring the vehicle to the location of the piece of equipment and form the energy exchange connection. In some examples, the selective enablement of energy transfer comprises controlling the vehicle (when it is an autonomous vehicle) to go to the location of the piece of equipment and automatically form the energy exchange connection (e.g., using robotics and sensing techniques to perform docking between the vehicle and the piece of equipment).

Yet alternatively or additionally, the controller **450** may be configured to selectively disable energy transfer via one or more of the energy exchange device(s) **410, 420,** responsive to an information signal (e.g., from the piece of equipment or from a remote controller) indicating that the battery system of the piece of equipment has reached a specific temperature value and/or that the battery system of the piece of equipment has reached a specific charging level (e.g., fully charged).

Yet alternatively or additionally, the controller **450** may be configured to selectively disable energy transfer via one or more of the energy exchange device(s) **410, 420,** responsive to a specified time having passed since it was enabled.

It should be understood that the enabling/disabling conditions exemplified above (and/or enabling/disabling other conditions) may be suitably combined in some examples. For example, the controller **450** may be configured to selectively enable energy transfer via one or more of the energy exchange device(s) **410, 420,** responsive to an enabling input at the user interface (UI) **451** if the exchange connection between the vehicle and the piece of equipment is formed.

It should also be noted that the arrangement **400** may - in addition to increasing the temperature of the battery system - be used to heat up other parts of the piece of equipment (e.g., an operator/driver cabin, transmission part(s), oil(s) such as axle oil, etc.).

In some examples, the controller **450** may be configured to cause the vehicle to prepare for heating of the battery system of the piece of equipment while the vehicle relocates to the location of the piece of equipment. For example, such preparations may include running the ICE and/or the FC (e.g., to charge the ESS as much as possible and/or to warm up the cooling fluid).

**FIG. 5** schematically illustrates a vehicle fleet and a computer system **500** implementing a remote vehicle selection function according to some examples (compare with **281** of **FIG. 1**), to cause temperature increase of a battery system of a piece of equipment. The computer system **500** may be implemented in any suitable way. For example, the computer system **500** may be implemented by a server **510,** a system of servers, a cloud service, etc.

The example scenario of **FIG. 5** relates to a vehicle fleet that comprises a plurality of vehicles **511, 512, 513, 514, 515, 516, 517,** each comprising an arrangement as described herein for causing temperature increase of a battery system of a piece of equipment (compare with **400** of **FIG. 4**). For example, all vehicles of the vehicle fleet may be associated with a same vehicle manufacturer and/or a same vehicle owner. Alternatively or additionally, all vehicles of the vehicle fleet may be associated with a same geographical area (e.g., a construction site, an industry complex, etc.).

The computer system **500** comprises a controller (CNTR; e.g., controlling/processing circuitry) **520.**

The controller **520** is configured to select (or cause selection of) a vehicle (here; **517**) from the plurality of available vehicles **511, 512, 513, 514, 515, 516, 517.** To this end the controller **520** may comprise, or be otherwise associated with (e.g., connected, or connectable, to) a selector (SEL; e.g., selecting circuitry or a selection module) **521,** configured to perform the selection.

The controller **520** is also configured to transmit a control signal **581** (compare with the control signal mentioned in connection with **FIG. 1** and **FIG. 4**) to the selected vehicle to trigger formation of a temperature exchange connection between the selected vehicle and the piece of equipment, and/or to trigger transfer of heat from the selected vehicle to the piece of equipment via the temperature exchange connection. To this end the controller **520** may comprise, or be otherwise associated with (e.g., connected, or connectable, to) a transmitter - illustrated here in the form of a transceiver (TRX) **530** - configured to perform the transmission.

In some examples, the controller **520** may also be configured to receive (e.g., via the transceiver **530**) respective information **582** pertaining to each of the plurality of vehicles, and to base the selection of a vehicle on the received information.

For example, the information **582** (or part thereof) may be received from the vehicle(s) as illustrated in **FIG. 5****.** Alternatively or additionally, the information **582** (or part thereof) may be received from a vehicle information service (e.g., provided by a vehicle manufacturer). Yet alternatively or additionally, the information **582** (or part thereof) may be received from a vehicle information input device (e.g., a user interface).

Generally, the information **582** may be static or dynamic. Examples of static information include (but is not limited to) the type(s) of power unit (e.g., ICE, FC, ESS, etc.) of the vehicle, etc. Examples of dynamic information include (but is not limited to) the location of the vehicle, the battery charge of the vehicle, the activity level of a fuel cell arrangement of the vehicle, the activity level of an internal combustion engine of the vehicle, etc. Static information typically needs to be supplied only once (e.g., when the vehicle is introduced into the fleet), or relatively seldom. Dynamic information typically needs to be updated repeatedly (e.g., with some periodicity, responsive to information change, etc.). Static and/or dynamic information may be updated responsive to an update request issued by the remote vehicle selection function.

The remote vehicle selection function opportunities for optimization. For example, efficiency (e.g., in terms of time and/or power consumption) for the use of the plurality of vehicles may be improved by selection of a vehicle that fulfills one or more of: is not currently needed/employed for other purposes, is relatively close to the location of the piece of equipment, has a reasonably charged ESS, has a FC, has a currently active FC or ICE, etc. Alternatively or additionally, efficiency (e.g., in terms of time to operable) for the piece of equipment may be improved by selection of a vehicle that fulfills one or more of: is relatively close to the location of the piece of equipment, has a reasonably charged ESS, has a FC, has a currently active FC or ICE, etc.

**FIG. 6** illustrates a computer-implemented method **600** according to some examples. The method **600** implements a remote vehicle selection function for causing temperature increase of a battery system of a piece of equipment. For example, the method **600** may be performed by the computer system **500** of **FIG. 5****.**

The method **600** comprises selecting a vehicle from a plurality of available vehicles, as illustrated by **630,** where each vehicle comprises an arrangement as described herein for causing temperature increase of a battery system of a piece of equipment (compare with **400** of **FIG. 4**).

The method **600** also comprises transmitting a control signal to the selected vehicle, as illustrated by **640,** for triggering formation of the temperature exchange connection between the selected vehicle and the piece of equipment, and/or transfer of heat from the selected vehicle to the piece of equipment via the temperature exchange connection.

In some examples, the method **600** also comprises receiving respective information pertaining to each of the plurality of vehicles, as illustrated by **610,** and basing the selection in **630** on the received information.

For example, the information received in **610** may comprise one or more of: a location of the vehicle, a type of power unit of the vehicle, a battery charge of the vehicle, an activity level of a fuel cell arrangement of the vehicle, and an activity level of an internal combustion engine of the vehicle.

The selection in **630** may be based on any suitable criterion/criteria. For example, a selection criterion may comprises one or more of: a distance between the vehicle and the piece of equipment being less than a distance threshold (e.g., the vehicle which is closest to the piece of equipment), the vehicle comprising an energy storing system with current charge above a charge threshold (e.g., the vehicle which is has highest charge), the vehicle comprising a fuel cell, the vehicle comprising a fuel cell which is currently active, and the vehicle comprising an internal combustion engine which is currently active.

It should be understood that any two or more of these and/or other criteria may be applied, as suitable (e.g., "closest vehicle with active FC", "highest charge among vehicles not farther than some specified distance from piece of equipment", etc.).

It should also be understood that a priority may be applied among these and/or other criteria (e.g., select a vehicle with currently active FC, if that is not possible - select a vehicle with current charge above a charge threshold, if that is not possible - select a vehicle with currently active ICE, etc.).

In some examples, the method **600** also comprises detecting a need for heating of one or more piece(s) of equipment, as illustrated by **620,** and performing the selection in **630** responsive thereto. For example, the detection in **620** may be based on one or more of: a measured outdoor temperature (e.g., received from a temperature sensor mounted within the geographical area where the pieces of equipment are operating, temperature information related to (e.g., received from) a piece of equipment, charging information related to (e.g., received from) a piece of equipment, etc.

Thus, according to some examples, there is provided an approach for charging of the battery system of a piece of construction equipment (e.g., an excavator) at a work site in which one or more vehicles (e.g., dump truck(s)) serve the piece of equipment. An advantage with the approach is that the battery system can be efficiently and safely charged even in very cold conditions.

According to the approach, a vehicle is configurable to cause heating of the battery system of the piece of equipment by transferring heat to the piece of equipment via a heat exchange connection, and - possibly - also to by transferring electric energy to the piece of equipment where it is used to run a heating system. The heat exchange connection may be arranged between the coolant systems of the vehicle and the piece of equipment. In case the vehicle is equipped with an ICE, a heat exchange device may be mounted on the exhaust system and the thus harvested heat may be transferred to the piece of equipment.

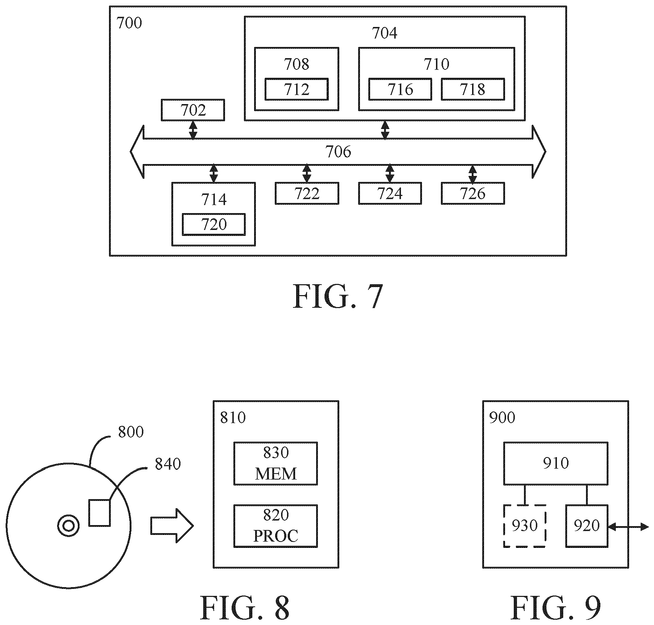

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

According to some examples, the computer system **700** may be suitable for selecting a vehicle from a plurality of available vehicles and transmit a control signal to the selected vehicle to trigger formation of a temperature exchange connection between the selected vehicle and the piece of equipment, and/or to trigger transfer of heat from the selected vehicle to the piece of equipment via the temperature exchange connection.

For example, the computer system **700** may be configured to perform, or cause performance of, one or more steps of the method **600** of **FIG. 6****.**

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a centralized selection processor or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 8** illustrates a computer program product exemplified as a non-transitory computer-readable medium in the form of a compact disc (CD) ROM **800.** The computer-readable medium has stored thereon program code **840** comprising instructions. The program code is loadable into processing circuitry (PROC; e.g., a data processing unit) **820,** which may, for example, be comprised in a control unit **810.** When loaded into the processing circuitry, the program code may be stored in a memory (MEM) **830** associated with, or comprised in, the processing circuitry. According to some examples, the program code may, when loaded into, and run by, the processing circuitry, cause execution of method steps according to, for example, any of the methods described herein.

**FIG. 9** schematically illustrates, in terms of a number of functional units, the components of a control unit **900** according to some examples. Processing circuitry **910** is provided using any combination of one or more of a suitable central processing unit CPU, multiprocessor, microcontroller, digital signal processor DSP, etc., capable of executing software instructions stored in a computer program product, e.g. in the form of a storage medium **930.** The processing circuitry **910** may further be provided as at least one application specific integrated circuit ASIC, or field programmable gate array FPGA.

Particularly, the processing circuitry **910** is configured to cause the control unit **900** to perform a set of operations, or steps, such as the method discussed in connection to **FIG. 6****.**

For example, the storage medium **930** may store the set of operations, and the processing circuitry **910** may be configured to retrieve the set of operations from the storage medium **930** to cause the control unit **900** to perform the set of operations. The set of operations may be provided as a set of executable instructions. Thus, the processing circuitry **910** is thereby arranged to execute methods as herein disclosed. In particular, there is disclosed a control unit **900** comprising processing circuitry **910,** an interface **920** coupled to the processing circuitry **910,** and a memory **930** coupled to the processing circuitry **910,** wherein the memory comprises machine readable computer program instructions that, when executed by the processing circuitry, causes the control unit to perform the methods discussed herein.

The storage medium **930** may also comprise persistent storage, which, for example, can be any single one or combination of magnetic memory, optical memory, solid state memory or even remotely mounted memory.

The control unit **900** may further comprise an interface **920** for communications with at least one external device. As such, the interface **920** may comprise one or more transmitters and receivers, comprising analogue and digital components and a suitable number of ports for wireline or wireless communication.

The processing circuitry **910** controls the general operation of the control unit **900,** e.g., by sending data and control signals to the interface **920** and the storage medium **930,** by receiving data and reports from the interface **920,** and by retrieving data and instructions from the storage medium **930.** Other components, as well as the related functionality, of the control node are omitted in order not to obscure the concepts presented herein.

### A non-exhaustive list of examples:

**Example 1:** An arrangement for a vehicle, the arrangement comprising an energy exchange device configured to: form a temperature exchange connection between the vehicle and a piece of equipment which is external to the vehicle; and cause temperature increase of a battery system of the piece of equipment by transferring heat from the vehicle to the piece of equipment via the temperature exchange connection.
**Example 2:** The arrangement of **Example 1,** wherein the temperature exchange connection is between the piece of equipment and a coolant system of the vehicle.
**Example 3:** The arrangement of any of **Examples 1-2,** wherein the temperature exchange connection is between the piece of equipment and a heat harvesting device mounted on an exhaust system of the vehicle.
**Example 4:** The arrangement of any of **Examples 1-3,** wherein the energy exchange device is a primary energy exchange device, the arrangement further comprising a secondary energy exchange device configured to: form an electric energy exchange connection between the vehicle and the piece of equipment; and cause temperature increase of the battery system of the piece of equipment by transferring electric energy from the vehicle to the piece of equipment.
**Example 5:** The arrangement of any of **Examples 1-4,** further comprising a controller configured to selectively enable transfer via the energy exchange device.
**Example 6:** The arrangement of **Examples 5,** wherein the controller is configured to enable transfer via the energy exchange device responsive to an enabling input at a user interface.
**Example 7:** The arrangement of any of **Examples 5-6,** wherein the controller is configured to enable transfer via the energy exchange device automatically responsive to the exchange connection between the vehicle and the piece of equipment being formed.
**Example 8:** The arrangement of any of **Examples 5-7,** wherein the controller is configured to enable transfer via the energy exchange device responsive to receipt of a control signal from a remote vehicle selection function.
**Example 9:** A vehicle comprising the arrangement according to any of **Examples 1-8.**
**Example 10:** The vehicle of **Example 9,** further comprising one or more electric motor(s) driven by a power unit, wherein each electric motor is configured to provide torque to one or more wheel(s) of the vehicle, and wherein the energy exchange device is configured to transfer heat generated by operation of the power unit to the piece of equipment via the temperature exchange connection.
**Example 11:** The vehicle of **Example 10,** wherein the power unit comprises an energy storing system, ESS, and/or a fuel cell, FC, and wherein the temperature exchange connection is between the piece of equipment and a coolant system for the ESS and/or FC.
**Example 12:** The vehicle of any of **Examples 10-11,** wherein the power unit comprises an internal combustion engine, ICE, and wherein the temperature exchange connection is between the piece of equipment and a heat harvesting device mounted on an exhaust system for the ICE.
**Example 13:** A computer system implementing a remote vehicle selection function to cause temperature increase of a battery system of a piece of equipment, the computer system comprising processing circuitry configured to: select a vehicle from a plurality of available vehicles, each comprising the arrangement according to any of **Examples 1-8;** and transmit a control signal to the selected vehicle to trigger: formation of the temperature exchange connection between the selected vehicle and the piece of equipment, and/or transfer of heat from the selected vehicle to the piece of equipment via the temperature exchange connection.
**Example 14:** The computer system of **Example 13,** wherein the processing circuitry is further configured to: receive respective information pertaining to each of the plurality of vehicles, wherein the information comprises one or more of: a location of the vehicle, a type of power unit of the vehicle, a battery charge of the vehicle, an activity level of a fuel cell arrangement of the vehicle, and an activity level of an internal combustion engine of the vehicle, and wherein the selection is based on the received information.
**Example 15:** The computer system of **Example 14,** wherein a selection criterion comprises one or more of: a distance between the vehicle and the piece of equipment being less than a distance threshold, the vehicle comprising an energy storing system with current charge above a charge threshold, the vehicle comprising a fuel cell, the vehicle comprising a fuel cell which is currently active, and the vehicle comprising an internal combustion engine which is currently active.
**Example 16:** A computer-implemented method implementing a remote vehicle selection function for causing temperature increase of a battery system of a piece of equipment, the method comprising selecting, by processing circuitry of a computer system, a vehicle from a plurality of available vehicles according to any of **Examples 10-12;** and transmitting, by the processing circuitry, a control signal to the selected vehicle for triggering: formation of the temperature exchange connection between the selected vehicle and the piece of equipment, and/or transfer of heat from the selected vehicle to the piece of equipment via the temperature exchange connection.
**Example 17:** The method of **Example 16,** further comprising: receiving, by the processing circuitry, respective information pertaining to each of the plurality of vehicles, wherein the information comprises one or more of: a location of the vehicle, a type of power unit of the vehicle, a battery charge of the vehicle, an activity level of a fuel cell arrangement of the vehicle, and an activity level of an internal combustion engine of the vehicle, and wherein the selection is based on the received information.
**Example 18:** The method of **Example 17,** wherein a selection criterion comprises one or more of: a distance between the vehicle and the piece of equipment being less than a distance threshold, the vehicle comprising an energy storing system with current charge above a charge threshold, the vehicle comprising a fuel cell, the vehicle comprising a fuel cell which is currently active, and the vehicle comprising an internal combustion engine which is currently active.
**Example 19:** A computer program product comprising program code for performing, when executed by the processing circuitry, the method of any of **Examples 16-18.**
**Example 20:** A non-transitory computer-readable storage medium (800) comprising instructions, which when executed by the processing circuitry, cause the processing circuitry to perform the method of any of **Examples 16-18.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An arrangement (400) for a vehicle (100, 200), the arrangement comprising an energy exchange device (410) configured to:
form a temperature exchange connection (110, 480, 490) between the vehicle and a piece of equipment (150) which is external to the vehicle; and
cause temperature increase of a battery system of the piece of equipment by transferring heat from the vehicle to the piece of equipment via the temperature exchange connection.

2. The arrangement of claim 1, wherein the temperature exchange connection is between the piece of equipment and a coolant system (431) of the vehicle.

3. The arrangement of any of claims 1-2, wherein the temperature exchange connection is between the piece of equipment and a heat harvesting device mounted on an exhaust system (432) of the vehicle.

4. The arrangement of any of claims 1-3, wherein the energy exchange device is a primary energy exchange device, the arrangement further comprising a secondary energy exchange device (420) configured to:
form an electric energy exchange connection (481, 491) between the vehicle and the piece of equipment; and
cause temperature increase of the battery system of the piece of equipment by transferring electric energy from the vehicle to the piece of equipment.

5. The arrangement of any of claims 1-4, further comprising a controller (450) configured to selectively enable transfer via the energy exchange device (410, 420).

6. The arrangement of claim 5, wherein the controller is configured to enable transfer via the energy exchange device responsive to an enabling input at a user interface (451).

7. The arrangement of any of claims 5-6, wherein the controller is configured to enable transfer via the energy exchange device automatically responsive to the exchange connection between the vehicle and the piece of equipment being formed.

8. The arrangement of any of claims 5-7, wherein the controller is configured to enable transfer via the energy exchange device responsive to receipt of a control signal from a remote vehicle selection function.

9. A vehicle (100, 200) comprising the arrangement according to any of claims 1-8.

10. The vehicle of claim 9, further comprising one or more electric motor(s) (382) driven by a power unit (340), wherein each electric motor is configured to provide torque to one or more wheel(s) (381) of the vehicle, and wherein the energy exchange device is configured to transfer heat generated by operation of the power unit to the piece of equipment via the temperature exchange connection.

11. A computer system (500) implementing a remote vehicle selection function to cause temperature increase of a battery system of a piece of equipment, the computer system comprising processing circuitry configured to:
select a vehicle (517) from a plurality of available vehicles (511-517), each comprising the arrangement according to any of claims 1-8; and
transmit a control signal to the selected vehicle to trigger:
formation of the temperature exchange connection between the selected vehicle and the piece of equipment, and/or
transfer of heat from the selected vehicle to the piece of equipment via the temperature exchange connection.

12. The computer system of claim 11, wherein the processing circuitry is further configured to:
receive respective information pertaining to each of the plurality of vehicles, wherein the information comprises one or more of: a location of the vehicle, a type of power unit of the vehicle, a battery charge of the vehicle, an activity level of a fuel cell arrangement of the vehicle, and an activity level of an internal combustion engine of the vehicle, and
wherein the selection is based on the received information.

13. A computer-implemented method (600) implementing a remote vehicle selection function for causing temperature increase of a battery system of a piece of equipment, the method comprising:
selecting (630), by processing circuitry of a computer system, a vehicle from a plurality of available vehicles according to any of claims 9-10; and
transmitting (640), by the processing circuitry, a control signal to the selected vehicle for triggering:
formation of the temperature exchange connection between the selected vehicle and the piece of equipment, and/or
transfer of heat from the selected vehicle to the piece of equipment via the temperature exchange connection.

14. A computer program product (800) comprising program code for performing, when executed by the processing circuitry, the method of claim 13.

15. A non-transitory computer-readable storage medium (800) comprising instructions, which when executed by the processing circuitry, cause the processing circuitry to perform the method of claim 13.

## Amended claims

### Amended claims in accordance with Rule 137(2) EPC.

1. A vehicle (100, 200) comprising an energy exchange device (410), a controller (450), and one or more electric motor(s) (382) driven by a power unit (340), wherein the power unit comprises a fuel cell arrangement and/or an internal combustion engine, wherein each electric motor is configured to provide torque to one or more wheel(s) (381) of the vehicle, and wherein
the energy exchange device is configured to:
form a temperature exchange connection (110, 480, 490) between the vehicle and a piece of equipment (150) which is external to the vehicle; and
cause temperature increase of a battery system of the piece of equipment by transferring heat - generated by operation of the power unit - from the vehicle to the piece of equipment via the temperature exchange connection; and
the controller is configured to:
transmit information to a remote vehicle selection function, wherein the information comprises a location of the vehicle and/or an activity level of the power unit; and
enable the heat transfer via the energy exchange device responsive to receipt of a control signal from the remote vehicle selection function, wherein the control signal indicates selection - by the remote vehicle selection function - of the vehicle based on the transmitted information.

2. The vehicle of claim 1, wherein the temperature exchange connection is between the piece of equipment and a coolant system (431) of the vehicle.

3. The vehicle of any of claims 1-2, wherein the temperature exchange connection is between the piece of equipment and a heat harvesting device mounted on an exhaust system (432) of the vehicle.

4. The vehicle of any of claims 1-3, wherein the energy exchange device is a primary energy exchange device, the vehicle further comprising a secondary energy exchange device (420) configured to:
form an electric energy exchange connection (481, 491) between the vehicle and the piece of equipment; and
cause temperature increase of the battery system of the piece of equipment by transferring electric energy from the vehicle to the piece of equipment.

5. The vehicle of any of claims 1-4, wherein the controller is further configured to enable transfer via the energy exchange device responsive to an enabling input at a user interface (451).

6. The vehicle of any of claims 1-5, wherein the controller is further configured to enable transfer via the energy exchange device automatically responsive to the exchange connection between the vehicle and the piece of equipment being formed.

7. A computer system (500) implementing a remote vehicle selection function among a plurality of available vehicles (511-517) according to any of claims 1-6 to cause temperature increase of a battery system of a piece of equipment, the computer system comprising processing circuitry configured to:
receive respective information pertaining to each vehicle of the plurality of available vehicles, wherein the information comprises a location of the vehicle and/or an activity level of the power unit of the vehicle;
select a vehicle (517) from the plurality of available vehicles based on the received information; and
transmit a control signal to the selected vehicle to trigger:
formation of the temperature exchange connection between the selected vehicle and the piece of equipment, and/or
transfer of heat from the selected vehicle to the piece of equipment via the temperature exchange connection.

8. The computer system of claim 7, wherein the information further comprises one or more of: a type of power unit of the vehicle, and a battery charge of the vehicle.

9. A computer-implemented method (600) implementing a remote vehicle selection function among a plurality of available vehicles (511-517) according to any of claims 1-6 for causing temperature increase of a battery system of a piece of equipment, the method comprising:
receiving (610), by processing circuitry of a computer system, respective information pertaining to each vehicle of the plurality of available vehicles, wherein the information comprises a location of the vehicle and/or an activity level of the power unit of the vehicle;
selecting (630), by the processing circuitry, a vehicle from the plurality of available vehicles based on the received information; and
transmitting (640), by the processing circuitry, a control signal to the selected vehicle for triggering:
formation of the temperature exchange connection between the selected vehicle and the piece of equipment, and/or
transfer of heat from the selected vehicle to the piece of equipment via the temperature exchange connection.

10. A computer program product (800) comprising program code for performing, when executed by the processing circuitry, the method of claim 9.

11. A non-transitory computer-readable storage medium (800) comprising instructions, which when executed by the processing circuitry, cause the processing circuitry to perform the method of claim 9.
